# EUROPEAN PATENT SPECIFICATION

(11) **EP 2 474 768 B1**
(45) Date of publication and mention of the grant of the patent: **02.10.2019**
(21) Application number: 11177694.4
(22) Date of filing: 16.08.2011
(51) Int. Cl.: F16L 25/00, F16L 19/028

(54) **Refrigerant pipe connection structure for air conditioner**
Kühlmittelleitungsverbinder für Klimaanlage
Structure de connexion de tuyaux réfrigérants pour climatiseur

(30) Priority: 06.01.2011 KR 20110001387
(43) Date of publication of application: 11.07.2012
(73) Proprietor: LG Electronics Inc., Youngdungpo-gu, Seoul 150-721 (KR)
(72) Inventor: Kim, Hanguk, 641-711 Gyeongnam (KR)
(74) Representative: Cabinet Plasseraud

(56) References cited:
- EP-A2- 0 302 690
- CN-Y- 2 549 297
- DE-U1-202010 003 282
- FR-A- 1 303 105
- US-A- 2 823 933
- US-A- 2 903 763
- US-A- 5 520 421

## Description

### CROSS REFERENCE TO RELATED APPLICATION

This application claims the benefit of the Patent Korean Application No. 10-2011-0001387, filed on January 6, 2011.

### BACKGROUND OF THE DISCLOSURE

### Field of the Disclosure

The present invention relates to an air conditioner, more particularly, to a connection structure of a refrigerant pipe connecting an indoor unit and an outdoor unit of a conditioner with each other.

### Discussion of the Related Art

In general, an air conditioner is an electric appliance which has a function of controlling a predetermined space to have a desired temperature and a desired humidity. Such an air conditioner typically uses a freezing cycle. The freezing cycle includes a compressor, an evaporator, an expansion valve and a condenser, and it forms a closed circuit. Refrigerant is circulating in the closed circuit of the freezing cycle. When a phase of the refrigerant is changed in the evaporator and the condenser, heat is absorbed from peripheral air or heat is emitted to the peripheral air. Because of that, the predetermined space is controlled to have a desired temperature or a desired humidity. Example of the connection structure can be found in US2823933.

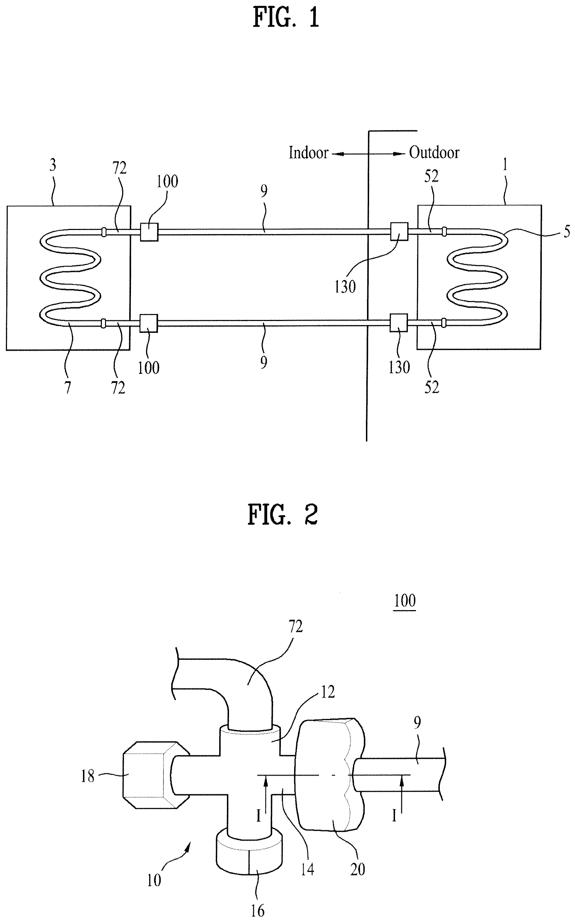

In reference to FIG. 1, a conventional air conditioner will be described as follows. Generally, parts provided in the air conditioner are dividedly installed in an indoor unit 1 and an outdoor unit 3. An evaporator 5 is installed in the indoor unit 1. A condenser 7 and a compressor (not shown) are installed in the outdoor unit 3. The evaporator 5 and the condenser 7 are connected with each other by a pipe 9 where refrigerant flowing, with forming a closed circuit entirely. The evaporator 5 and the condenser 7 are kinds of evaporators. Refrigerant flowing in the evaporator 5 and the condenser 7 may exchange heat with peripheral air. When the refrigerant is evaporated, heat of the room is absorbed by the evaporator 5. When the refrigerant is condensed, heat generated from the condensation is emitted to peripheral air, that is, outside.

When it is used after installed in a predetermined room, the air conditioner includes a pipe located outside the indoor and outdoor units 1 and 3 (hereinafter, 'external refrigerant pipe') connecting the indoor unit 1 and the outdoor unit 3 with each other. In other words, each of the parts composing the freezing cycle, namely, the evaporator 5, the condenser 7 and the compressor (not shown) may form the freezing circuit. Here, the refrigerant is circulating in the closed circuit. However, before the air conditioner is installed, the outdoor unit 3, the indoor unit 1 and the external refrigerant pipe 9 connecting the outdoor unit 3 with the indoor unit 1 are separated independently. In other words, when the air condition is installed, both ends of the external refrigerant pipe 9 are coupled to the condenser 7 of the outdoor unit and to the evaporator 5 of the indoor unit via connection units 100 and 130, respectively. Internal refrigerant pipes 72 and 52 having a predetermined length are coupled to both ends of the condenser 7 and to both ends of the evaporator 5 inside the outdoor unit 3 and the indoor unit 1, respectively. Generally, the internal refrigerant pipes 72 and 52 are connected to the connection units 100 and 130, respectively. However, in this case, the lengths of the internal refrigerant pipes 72 and 52 are relatively small inside the indoor unit 1 and the outdoor unit 3, for example, approximately 30cm. as follows, it will be expressed that the condenser 7 and the evaporator 5 are connected with the connection units 100 and 130, respectively, for explanation convenience.

Typically, the connection units 100 and 130 are located outer to the indoor unit 1 and the outdoor unit 3, respectively. The connection unit 130 for the indoor unit (hereinafter, indoor unit connection unit 130) and the connection unit 100 for the outdoor unit (outdoor unit connection unit 100) typically have a separation and connection structure, for example, they are connected with and disconnected from the indoor and outdoor unit by using screws, respectively. However, typically, the outdoor unit connection unit 100 has a function of selectively opening or closing a refrigerant path and a function of allowing refrigerant refilling, rather than the separation/connection structure. In other words, the indoor unit connection unit 130 has a similar basic structure with the outdoor unit connection unit 100, without the functions of opening or closing the refrigerant path selectively and of refrigerant introduction.

In reference to FIG. 2, the connection units will be described in detail. The connection units 100 and 130 are configured of the outdoor unit connection unit 100 and the indoor unit connection unit 130. As mentioned above, the connection structures of both connection units are similar to each other. Compared with the indoor unit connection unit 130, the outdoor unit connection unit 100 has additional functions and the additional functions will be described as follows.

The outdoor unit connection unit 100 includes the condenser 7, a connection member 100 for connecting the condenser 7 with the external refrigerant pipe 9, and a coupling member 20 for detachably coupling the connection member 10 to the external refrigerant pipe 9. The connection member 10 may include a path controlling part 16 to be employed as an on/off valve which opens or closes the refrigerant path selectively before installing and relocating the air conditioner. In addition, the connection member 1 may further include a refrigerant supplying part 18 used to supply refrigerant to the air conditioner when it is required to supplement refrigerant because of refrigerant leakage. As mentioned above, the out door unit connection member 10 has the function of the on/off valve and it is typically called as a service valve. The coupling member 20 is called as a service nut, because it can detachably couple the external refrigerant pipe 9 to the service valve 10 and because it has an arm screw part 22.

In the conventional refrigerant pipe connection structure of the air conditioner, copper based materials may be formed to form a heat exchanger configured of the condenser 7 and the evaporator 5, the connection member 10, the coupling member 20 and the external refrigerant pipe 9. Generally, the heat exchanger is formed of copper and both of the connection member 10 and the coupling member 20 are formed of brass. The external refrigerant pipe 9 is formed of copper. Because of properties possessed by the heat exchanger, a heat exchanging ability has priority in forming the heat exchanger and it is preferable copper with an excellent ability of heat transmission is used to form the heat exchanger. Airtightness has priority when forming the external refrigerant pipe 9. Because of that, the external refrigerant pipe 9 may have an ability of insulation. Nevertheless, the external refrigerant pipe 9 is formed of copper in the conventional air conditioner. Here, copper has disadvantages of relatively high priced and not eco-friendly.

Document CN2549297Y discloses a coupling in air conditioner, wherein a connection member is made of copper and is coated with PTFE, an external refrigerant pipe is made of aluminum and a coupling member is made of aluminum as well.

### SUMMARY OF THE DISCLOSURE

Accordingly, the present invention is directed to an air conditioner.

An object of the present invention is to provide a connection structure of a refrigerant pipe for an air conditioner, with a relatively low price and being eco-friendly.

Additional advantages, objects, and features of the disclosure will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, a refrigerant pipe connection structure for an air conditioner is defined by claim 1 and includes a connection member connected with a heat exchanger; an external refrigerant pipe connected with the connection member, the external refrigerant pipe formed of a different material from a material used to form the connection member; and a coupling member which connects the connection member and the external refrigerant pipe with each other, wherein an contact area between the external refrigerant pipe and the coupling member is configured to prevent galvanic corrosion.

For that, the contact area between the coupling member and the external refrigerant pipe is formed of a material having a galvanic potential difference of a predetermined value or less. The connection member may be formed of a copper based material and an adhered area between the external refrigerant pipe and the coupling member is formed of an aluminum based material. An entire area of the coupling member is formed of an aluminum based material. A strength of a material used to form the coupling member is larger than a strength of the material used to form the external refrigerant pipe. The material used to form the external refrigerant pipe is A11060-O and the material used to form the coupling member is Al7075-O.

The contact area between the connection member and the external refrigerant pipe may be located within the coupling member. The coupling member detachably may connect the connection member and the external refrigerant pipe with each other. The connection member and the coupling member are coupled to each other by a screw, to connect the connection member and the external refrigerant pipe with each other.

In another aspect of the present invention, an insulation member may be provided to electrically insulate the contact area between the external refrigerant pipe and the coupling member.

In a further aspect of the present invention, a corrosion inhibitor may be provided to prevent corrosion at the contact area between the external refrigerant pipe and the coupling member.

In a still further aspect of the present invention, a corrosion preventing part may be provided at a predetermined area of the external refrigerant pipe distant from the contact area between the external refrigerant pipe and the coupling member, to prevent corrosion at the external refrigerant pipe.

The refrigerant pipe connection structure for the air conditioner has following effects. Firstly, a metal which is relatively cheap, aluminum is used to embody the refrigerant connection structure for the air conditioner. As a result, the manufacturing costs may be saved advantageously. Secondly, the material which can be decomposed easily in natural environments, aluminum is used to embody the refrigerant connection structure for the air conditioner. As a result, eco-friendly air conditioners may be manufactured advantageously.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the disclosure and are incorporated in and constitute a part of this application, illustrate embodiment(s) of the disclosure and together with the description serve to explain the principle of the disclosure.

In the drawings:
FIG. 1 is a diagram schematically illustrating a structure of an conventional air conditioner;
FIG. 2 is a perspective view illustrating a connection unit shown in FIG. 1;
FIG. 3 is a sectional view illustrating a refrigerant connection structure for an air conditioner according to an embodiment of the present invention, which is I-I sectional view of FIG. 2;
FIG. 4 is a diagram illustrating a principle configured to maintain adhesion between metals airtight;
FIG. 5 is a diagram illustrating results of experiments performed for reliability on a refrigerant connection structure of the conventional air conditioner and on embodiments of the refrigerant connection structure for the air conditioner according to the present invention;
FIG. 6 is a diagram illustrating conditions of the reliability experiments shown in FIG. 5;
FIG. 7 is a photograph of experimental results on the sixth one of various samples shown in FIG. 5; and
FIG. 8 is a photograph of experimental results on the fifth one of the samples shown in FIG. 5.

### DESCRIPTION OF SPECIFIC EMBODIMENTS

Reference will now be made in detail to the specific embodiments of the present invention, examples of which are illustrated in the accompanying drawings. Wherever possible, the same reference numbers will be used throughout the drawings to refer to the same or like parts.

As follows, specific embodiments of a refrigerant connection structure of a refrigerant pipe for an air conditioner according to the present invention will be described.

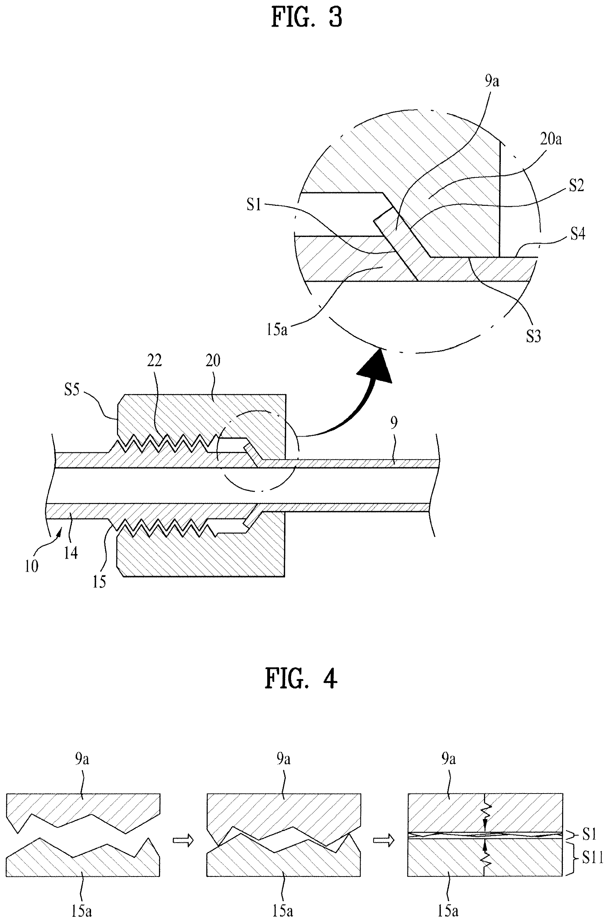

In reference to FIG. 3, a refrigerant connection structure for a conventional air conditioner will be described. For explanation convenience, a connection structure in an outdoor unit 3 will be described. An end of a connection member 10 (service valve) is connected with an end of an external refrigerant pipe 9. The connection member 10 and the external refrigerant pipe 9 detachably coupled to each other by a coupling member 20 (service nut).

Each of parts provided in the air conditioner will be described. To prevent refrigerant leakage effectively, a flare 9a is provided at an end of the external refrigerant pipe 9 and a slope 15a is provided at an end of the connection member 10, corresponding to the flare 9a of the external refrigerant pipe 9. In other words, an inner surface of the flare 9a provided in the external refrigerant pipe 9 is in very close contact with an outer surface of the slope 15a provided in the connection member 10 airtight, such that this portion (S1) may prevent refrigerant leakage.

The connection member 10 and the external refrigerant pipe 9 are not coupled to each other directly and it is typical that they are coupled to each other by a coupling member 20. In other words, a male screw part 15 is provided in an outer end surface of the connection member 10 and a female screw part 22 is provided in a predetermined portion of an inner surface of the coupling member 20, corresponding to the male screw part 15. That is, the female screw part 22 of the connection member 10 is screw-coupled to the male screw part 15 of the coupling member 20. Here, to prevent the refrigerant leakage more effectively, an adhesion part 20a having a profile corresponding to the flare 9a of the external refrigerant pipe 9 is provided in the other portion of the inner surface of the coupling member 20, in opposite to the female screw part. In other words, when the connection member 10 is screw-coupled to the coupling member 20, an inner surface of the adhesion part 20a provided in the coupling member 20 presses an outer surface of the flare 9a provided in the external refrigerant pipe 9. Because of that, the flare 9a of the external refrigerant pipe 9 is adhered to the slope 15a of the connection member 10 to maintain the airtightness.

According to this embodiment, the connection member 10 is formed of brass, which is the same material used to form the connection member of the conventional air conditioner, and the external refrigerant pipe 9 is formed of aluminum. Approximately four connection members 10 are used in the air conditioner, with a small size, and they affect a raw price little. A predetermined side of the connection member 10 is connected with a refrigerant pipe connected with the condenser 7 by welding and the like. Considering the welding, the brass which is the same material used in the conventional air conditioner is used as it is. However, the external refrigerant pipe 9 is formed of a different material from the copper used to in the conventional air conditioner. This is because the most important abilities required by the external refrigerant pipe 9 is airtightness at the connecting portion between the connection member 10 and the external refrigerant pipe 9 and installation convenience when the external refrigerant pipe 9 is installed, not the heat exchanging ability required by the heat exchanger. Because of that, it is preferable that the external refrigerant pipe 9 is formed of a predetermined material which is relatively lower priced and more eco-friendly than the copper, with satisfying the ability required by the external refrigerant pipe 9 and with other advantageous.

The abilities required by the external refrigerant pipe 9 will be described in detail. According to an installation location of the air conditioner, the external refrigerant pipe 9 may typically accompany a bending process. It is preferable that the external refrigerant pipe 9 has a good bending workability. In addition, when it is connected with the connection member 10, the external refrigerant pipe 9 typically includes the flare 9a formed at the end thereof. Because of that, it is preferable that the external refrigerant pipe 9 has a good flare formation workability. Airtightness is affected by ductility, elasticity and hardness. In other words, airtightness is achieved when ductility of a metal is good and elasticity of the metal has to be larger than a pressure of refrigerant which has to be made airtight. In addition, surface hardness of the metal has to be not so large. When the surface hardness is large, cracks might occur and refrigerant leakage might occur at the cracks.

In reference to FIG. 4 will be described a principle of the airtightness when the connection member 10 is connected with the external refrigerant pipe 9, that is, the airtightness between the flare 9a of the external refrigerant pipe 9 and the adhered area (S1) of the slope 14a provided in the connection member 10.

When a predetermined force is applied to the flare 9a of the external refrigerant pipe 9 and the slope 15a of the connection member 10 by the screw-coupling between the connection member 10 and the coupling member 20, plastic deformation is generated at an adhesion surface (S1) and elastic deformation is generated at an inner surface (S11). Elasticity generated by the elastic deformation may press the adhered area (S1) in both directions. If the pressure of the refrigerant gas flowing along the external refrigerant pipe 9 is larger than the elasticity generated at the elastic deformation area, the refrigerant gas would leak via the adhered area (S1), that is, the plastic deformation area. However, the elasticity is affected by a yield strength of the adhered metal. As the yield strength is larger, it is better.

Considering such the required conditions, aluminum is selected to form the external refrigerant pipe 9 in this embodiment. A yield strength of aluminum, for example, A11060-O is 27.6 Mpa and the pressure of the high pressure refrigerant pipe is 4Mpa. Because of that, when Al1060-O is used, a safety factor may be 5 or more. In case of copper (C1220T-O), a yield strength is 75Mpa. The yield strength of Al1060-O is smaller than that of C1220T-O. Even in case of using Al1060-O, a safety factor may be 5 or more and this may maintain airtightness for the safety factor to be 5 or more, without any problems. In addition, elongations of C1220T-O and Al1060-O may be 40% and 43%. Modulus of C1220T-O and A11060-O may be 115Gpa and 68.9Gpa. As a result, the aluminum has good installation convenience such as good adhesion, bending workability and flare formation workability.

If the external refrigerant pipe 9 is formed of a different material from the material used to form the connection member 10 according to this embodiment, that is, if brass is used to form the connection member 10 and aluminum is used to form the external refrigerant pipe 9, contact corrosion generated in bimetals (galvanic corrosion) has to be put into consideration. When two different metals are in contact with each other, difference between potentials possessed by the two metals forms a current and the metal having a lower electric potential is activated by the current. Because of that, reactivity is getting high and corrosion is generated, which is the galvanic corrosion.

For example, standard reduction potentials of copper, brass and aluminum are 0.34V, -0.25V, -1.68V. A potential difference between brass and copper is 0.59V and a potential difference between brass and aluminum is 1.43V. A potential difference between copper and aluminum is 2.02V.

As a result, when the connection member 10 and the external refrigerant pipe 9 are formed of brass and aluminum, respectively, a galvanic potential difference between brass and aluminum is increased to be 1.43V and it is concerned that the galvanic corrosion will occur. However, the adhered area (S1) between the flare 9a of the external refrigerant pipe 9 and the slope 15a of the connection member 10 has to be maintained. However, aluminum and brass are adhered to each other at the adhered area (S1) and it has to be put into consideration how to prevent the galvanic corrosion. In addition, when the coupling member 20 is formed of brass like the coupling member of the conventional air conditioner, different two metals are contacting even at an adhered area (S2, see FIG. 3) between the inner surface of the coupling member 20 and the outer surface of the connection member 10, not the area the refrigerant is directly leaked. Because of that, it is preferable that it has to be put into consideration how to prevent the galvanic corrosion at this area.

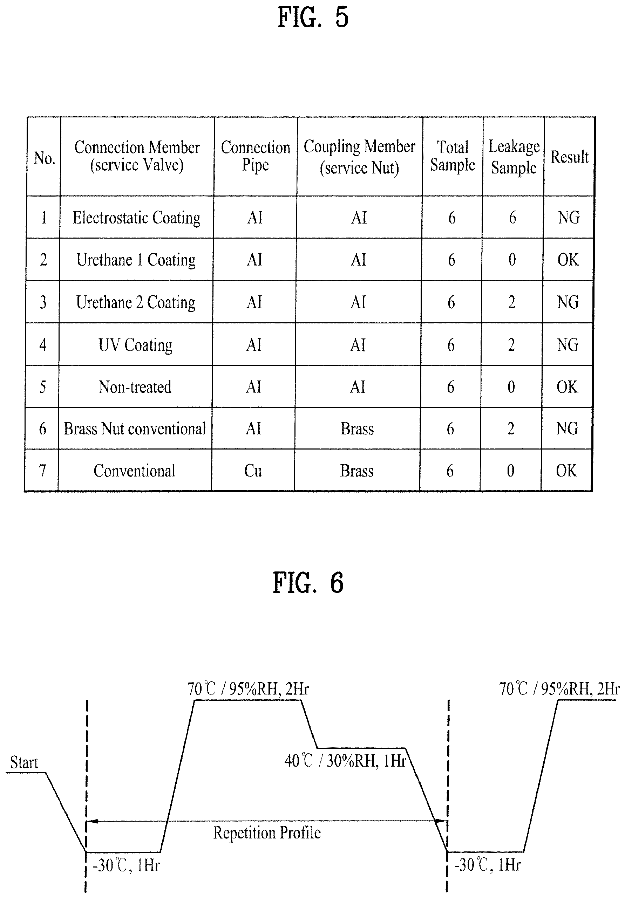

Considering the galvanic corrosion mentioned above, brass which is the same material used to form the conventional connection member is used to form the connection member 10 and aluminum is sued to form the external refrigerant pipe 9. Here, various samples of the coupling member 20 are made of the brass used to form the coupling member of the conventional air conditioner and aluminum, to perform reliability experiments. Since the coupling member 20 is fabricated in a plastic treatment process, an aluminum based material having a good strength, for example, A17075-T6 is used. In reference to FIGS. 3 and 5, the result of the reliability experiments on the various samples will be described. Sample 1 through 5 are the connection member 10, the coupling member 20 and the external refrigerant pipe 9 made of brass, aluminum and aluminum. In Sample 1 through 4, various types of coatings are performed to the adhered area (S1) to prevent adhesion of different metals, such that the connection member 10 made of brass may not be adhered to the external refrigerant pipe 9 made of aluminum. The coating is performed on an outer surface of the slope 15a provided in the connection member 10. In Sample 5, additional coating is not performed to the adhered area (S1) between the connection member 10 and the external refrigerant pipe 9.

In Sample 6, the connection member 10, the coupling member 20 and the external refrigerant pipe 9 are made of brass, brass and aluminum. In Sample 7, the connection member 10, the coupling member 20 and the external refrigerant pipe 9 are made of brass, brass and copper like the conventional material used to form the conventional ones.

Reliability experiments are performed to each of the samples under conditions shown in FIG. 6. In other words, after the sample is submerged into salt water (NaCl 5%) for 72 hours, the sample is left at 10 below zero (minus 10 degrees) for an hour and at 70 degrees for two hours, with a relative humidity of 95% and at 40 degrees for an hour, with a relative humidity of 30%, repeatedly. Six samples categorized based on a sample type are used. Error generation is identified for each of the six samples at an interval of 100 hours in 500 hours after the experiment starts.

In reference to FIGS. 3 and 5 again, reliability experiment results will be described as follows. Based on the result of the experiments, leakage is not generated in the connection structure of the conventional refrigerant pipe for the conventional air conditioner, that is, Sample 7-connection member (brass)/coupling member (brass)/external refrigerant pipe (copper).

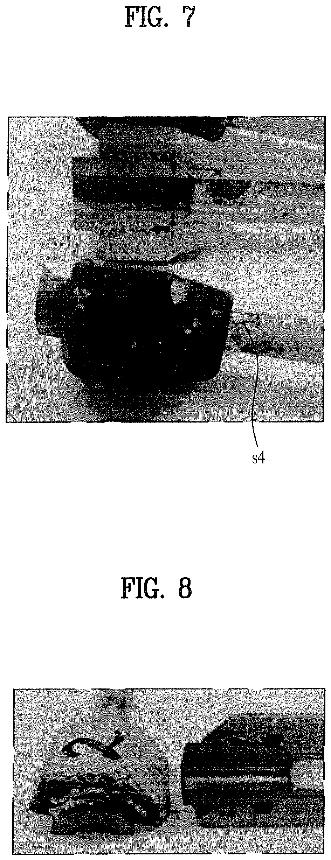

The results of the experiments according to this embodiment will be described. When only the material of the external refrigerant pipe 9 is changed into aluminum, that is, in Sample 6-connection member (brass)/coupling member (brass)/external refrigerant pipe (aluminum)-, leakage is generated in two of six samples. Here, corrosion is generated not in the directly contact area (S1) between the connection member 10 and the external refrigerant pipe 9 but in an external refrigerant pipe area (S4) distance from the coupling member 20 (see FIG. 7).

Next, will be described the result of the reliability experiment when the materials of the external refrigerant pipe 9 and the coupling member 20 are changed into aluminum, that is, in Sample 1 through 5 -connection member (brass)/coupling member (aluminum)/external refrigerant pipe (aluminum)-. Different from expectation, no leakage is generated in Sample 1 through 4, except Sample 2 trying not to generate direct contact in two different metals by coating the direct contact area (S1) between the connection member 10 and the external refrigerant pipe 9, that is, the area where corrosion will be expected to be generated by the galvanic corrosion. No leakage is generated in Sample 5 which performs no coating to the direct contact area (S1) between the connection member 10 and the external refrigerant pipe 9 (see FIG. 8).

Based on the result of the experiments, as shown in Sample 1 through 4, which is different from the expectation, the galvanic corrosion is not really a problem at the adhered area (S1) between the connection member 10 and the external refrigerant 9. Even if the adhered area (S1) is coated to prevent the galvanic corrosion which generated by contact between two different metals, leakage is generated not by the galvanic corrosion but by damage to the airtightness. In other words, since d strength of a material used in the coating is low, for example, approximately 4Mpa, permanent deformation and scratches are generated at the coated area by the yield in the connection process and airtightness is damaged accordingly. In addition, the pressure of the refrigerant is over the elasticity of the coating material and the leakage is generated accordingly.

Different from the expectation, conclusion is reached based on the result of the studies on the reliability experiments. When the materials used to form the connection member, the coupling member and the external refrigerant pipe 9 may be brass, aluminum and aluminum, there may be three areas where two different metals are adhered to each other. In other words, the areas where the two different metals are adhered to each other may include a screw-coupling area between the coupling member 20 and the connection member 10, the adhered area (S1) between the connection member 10 and the external refrigerant pipe 9 and an area (S2 and S3) adhered to the coupling member 20 and the external refrigerant pipe 9. However, even in case of the contact between the two different metals, the galvanic corrosion does not matter at the area which generates the worst concern about refrigerant leakage while the refrigerant is substantially flowing, that is, the adhered area (S1) where the external refrigerant pipe and the connection member 10 are directly contacting with each other. Based on the result of the studies, water or oxygen supply may not be performed smoothly and it is though that corrosion generation does not matter. The corrosion generated by contact between two different metals, that is, the galvanic corrosion is generated at the screw-coupling area between the coupling member 20 and the connection member 10. However, the corrosion generation area is mainly the external surface (S5) of the coupling member 20 and it affects the refrigerant leakage little. Even corrosion is generated at a predetermined area (S4) of the external refrigerant pipe 9 by the contact between the two different metals at the contact area (S2, S3) with the coupling member 20 and the external refrigerant pipe 9.

As a result, based on the result of putting the study results together, contact of the two different metals at the adhered area (S1) between the connection member 10 and the external refrigerant pipe 9 may not generated the galvanic corrosion largely. The materials used to form the connection member 10 and the external refrigerant 9 may be different from each other. In addition, the contact between the two different metals of the connection member 10 and the coupling member 20 generates the galvanic corrosion. Here, the corrosion area may be the external surface (S5) of the coupling member 20, not the connection member 10 nor the external refrigerant pipe 9, such that the refrigerant leakage may not be a problem. The galvanic corrosion generated by the potential difference between the external refrigerant pipe 9 and the coupling member 20 does matter and it is preferable that the galvanic corrosion is prevented. For example, the materials used to form the external refrigerant pipe 9 and the coupling member 20 have galvanic potentials of predetermined values or less like this embodiment or single metals, for example, aluminum based materials. An allowed galvanic potential difference may be determined by experiments, for example, 0.59V which is the potential difference between brass and copper.

This embodiment represents that the entire area of the coupling member 20 is made of aluminum and the present invention is not limited thereto. Only the adhered area 20a of the coupling member 20 where the external refrigerant pipe 9 is adhered may be made of a material which has a galvanic potential difference of a predetermined value or less with the external refrigerant pipe 9. What described above may be embodied by various methods. For example, a front end part of the coupling member 20, that is, where the connection member is coupled may be not be made of aluminum. A rear end part of the coupling member 20, that is, the adhered area 20a of the coupling member 20 in contact with the external refrigerant pipe 9 may be made of the material of which the galvanic potential difference with the material used to form the external refrigerant pipe 9 is a predetermined value or less. Since the galvanic corrosion is affected by the weight of the oxidation material in the galvanic corrosion, that is, aluminum, it is preferable that the weight of the coupling member 20 is relatively larger than the weight of the external refrigerant pipe 9 to induce corrosion to the coupling member 20 from both of the external refrigerant pipe 9 and the coupling member 20, which are formed of aluminum. In other words, they are designed to be a broad oxidation electrode and a reduction electrode. As a result, under the same condition, the size of the coupling member 20 formed of aluminum may be relatively larger than the size of the conventional coupling member 20 formed of brass.

In reference to FIG. 3, another embodiment of the connection structure of the refrigerant pipe for the air conditioner according to the present invention will be described. As mentioned above, the galvanic corrosion is generated the potential difference generated by the contact between two different metals of the external refrigerant pipe 9 and the coupling member 20. Because of that, when different materials are used to form the coupling member 20 and the external refrigerant pipe 9, for example, when two different metals of brass and aluminum are used to form the coupling member 20 and the external refrigerant pipe 9, respectively, it is required to prevent the galvanic corrosion generated by the contact between the external refrigerant pipe 9 and the coupling member 20. As a result, the contact area (S2 and S3) between the external refrigerant pipe 9 and the coupling member 20 may be electrically short circuited, for example. An insulation sleeve may be provided at the contact area (S2 and S3) between the external refrigerant pipe 9 and the coupling member 20 for electrical insulation. Alternatively, a corrosion inhibitor may be added between the external refrigerant pipe 9 and the coupling member 20. In the meanwhile, the area where corrosion is generated especially is an area (S4) exposed to water or oxygen easily, that is, the external refrigerant pipe 9. Because of that, an appropriate corrosion preventing part may be provided in the area exposed to oxygen or water easily, that is, the external refrigerant pipe 9, to prevent corrosion. For example, proper coating may be performed to this area not to contact with oxygen or water directly. In the meanwhile, the embodiment described above represents and illustrates the connection structure of the refrigerant pipe with the outdoor unit 3. However, the present invention is not limited thereto. In other words, it is possible to apply the principle of the present invention to the connection structure of the refrigerant pipe with the indoor unit 1. In addition, the embodiment represents the connection unit having the detachable structure and the present invention is not limited thereto. The above embodiment represents that the external refrigerant pipe 9 and the coupling member 20 are formed of aluminum.

The connection structure of the refrigerant pipe for the air conditioner according to the present invention has following advantages and effects. According to the present invention, the external refrigerant pipe which is a refrigerant pipe connecting the outdoor unit and the indoor unit with each other may be formed of the predetermined material, not copper which is relatively expensive and not eco-friendly. As a result, an eco-friendly air conditioner may be manufactured according to the present invention and manufacturing costs may be reduced. For example, the length of the external refrigerant pipe 9 is approximately 5 ∼8m, although it is different based on a type of the air conditioner. When aluminum is used to form the external refrigerant pipe, instead of copper, the price of 12,000 won may be reduced for every air conditioner. As a result, approximately 2 billion won of cost saving may be achieved effectively, if it is assumed that a quarter of a million air conditioners are manufactured a year.

It will be apparent to those skilled in the art that various modifications and variations can be made in the present invention without departing from the scope of the invention as defined by appended claim 1. Thus, it is intended that the present invention covers the modifications and variations of this invention provided they come within the scope of the appended claim.

## Claims

1. A refrigerant pipe connection structure for an air conditioner comprising:
a connection member (10) connected with a heat exchanger which includes a male screw (15) part provided at an outer surface thereof and a slope (15a) provided at an end thereof;
an external refrigerant pipe (9) connected with the connection member (10) which includes a flare (9a) provided at an end thereof, said flare (9a) of the external refrigerant pipe (9) corresponds to the slope (15a) of the connection member (10) to form close contact with each other, and
a coupling member (20) for mechanically coupling the connection member (10) and the external refrigerant pipe (9) with each other, which includes a female screw part (22) corresponding to the male screw part (15) of the connection member (10), said female screw part (22) being provided at an inner surface of the coupling member (20) and the coupling member further including an adhesion part (20a) provided in the other portion of the inner surface of the coupling member (20) opposite to the female screw part (22), said adhesion part (20a) has a profile corresponding to the flare (9a) of the external refrigerant pipe (9), wherein the female screw part (22) is screwed directly to the male screw part (15) and the adhesion part (20a) presses an outer surface of the flare (9a) and is adhered directly to the flare (9a);
wherein a material of the connection member (10) is different from a material of the external refrigerant pipe (9), and a material of the coupling member (20) is substantially same as the material of the external refrigerant pipe (9) in view of a galvanic potential, so that a contact area between the external refrigerant pipe (9) and the coupling member (20) is configured to prevent galvanic corrosion, wherein the connection member (10), the external refrigerant pipe (9) and the coupling member (20) are made of metal; **characterized in that**
the material used to form the external refrigerant pipe (9) is Al1060-O and the material used to form the coupling member (20) is Al7075-O.

## Patentansprüche

1. Kältemittelleitungsverbindungsstruktur für eine Klimaanlage, die aufweist:
ein Verbindungselement (10), das mit einem Wärmetauscher verbunden ist, der einen aufzunehmenden Schraubenteil (15), der an seiner Außenoberfläche bereitgestellt ist und eine an einem seiner Enden bereitgestellte Neigung (15a) umfasst;
eine Außenkältemittelleitung (9), die mit dem Verbindungselement (10) verbunden ist, die eine an einem ihrer Enden bereitgestellte Aufweitung (9a) umfasst, wobei die Aufweitung (9a) der Außenkältemittelleitung (9) der Neigung (15a) des Verbindungselements (10) entspricht, um einen engen Kontakt miteinander herzustellen, und
ein Kopplungselement (20) zum mechanischen Miteinanderkoppeln des Verbindungselements (10) und der Außenkältemittelleitung (9), welches einen aufnehmenden Schraubenteil (22), der dem aufzunehmenden Schraubenteil (15) des Verbindungselements (10) entspricht, umfasst, wobei der aufnehmende Schraubenteil (22) an einer Innenoberfläche des Kopplungselements (20) bereitgestellt ist und das Kopplungselement ferner einen Haftteil (20a) umfasst, der in dem anderen Abschnitt der Innenoberfläche des Kopplungselements (20) entgegengesetzt zu dem aufnehmenden Schraubenteil (22) bereitgestellt ist, wobei der Haftteil (20a) ein Profil hat, das der Aufweitung (9a) der Außenkältemittelleitung (9) entspricht, wobei der aufnehmende Schraubenteil (22) direkt an den aufzunehmenden Schraubenteil (15) geschraubt wird und der Haftteil (20a) eine Außenoberfläche der Aufweitung (9a) drückt und direkt an die Aufweitung (9a) angehaftet wird;
wobei ein Material des Verbindungselements (10) verschieden zu einem Material der Außenkältemittelleitung (9) ist und ein Material des Kopplungselements (20) unter dem Gesichtspunkt eines galvanischen Potentials im Wesentlichen das Gleiche wie das Material der Außenkältemittelleitung (9) ist, so dass ein Kontaktbereich zwischen der Außenkältemittelleitung (9) und dem Kopplungselement (20) aufgebaut ist, um eine galvanische Korrosion zu verhindern, wobei das Verbindungselement (10), die Außenkältemittelleitung (9) und das Kopplungselement (20) aus Metall hergestellt sind;
**dadurch gekennzeichnet, dass** das Material, das verwendet wird, um die Außenkältemittelleitung (9) herzustellen, A11060-O ist, und das Material, das verwendet wird, um das Kopplungselement (20) herzustellen, A17075-O ist.

## Revendications

1. Structure de connexion de tuyau réfrigérant pour un climatiseur comprenant :
un élément de connexion (10) connecté à un échangeur de chaleur qui comporte une partie de vis mâle (15) prévue à une surface extérieure de celui-ci et une pente (15a) prévue à une extrémité de celui-ci ;
un tuyau réfrigérant externe (9) connecté à l'élément de connexion (10) qui comporte un évasement (9a) prévu à une extrémité de celui-ci, ledit évasement (9a) du tuyau réfrigérant externe (9) correspond à la pente (15a) de l'élément de connexion (10) pour former un contact étroit entre eux, et
un élément de couplage (20) pour coupler mécaniquement l'élément de connexion (10) et le tuyau réfrigérant externe (9) entre eux, qui comporte une partie de vis femelle (22) correspondant à la partie de vis mâle (15) de l'élément de connexion (10), ladite partie de vis femelle (22) étant prévue à une surface intérieure de l'élément de couplage (20) et l'élément de couplage comportant en outre une partie d'adhésion (20a) prévue dans l'autre portion de la surface intérieure de l'élément de couplage (20) opposée à la partie de vis femelle (22), ladite partie d'adhésion (20a) a un profil correspondant à l'évasement (9a) du tuyau réfrigérant externe (9), dans laquelle la partie de vis femelle (22) est vissée directement à la partie de vis mâle (15) et la partie d'adhésion (20a) presse une surface extérieure de l'évasement (9a) et est amenée à adhérer directement à l'évasement (9a) ;
dans laquelle
un matériau de l'élément de connexion (10) est différent d'un matériau du tuyau réfrigérant externe (9), et un matériau de l'élément de couplage (20) est sensiblement le même que le matériau du tuyau réfrigérant externe (9) compte tenu d'un potentiel galvanique, de sorte qu'une zone de contact entre le tuyau réfrigérant externe (9) et l'élément de couplage (20) soit configurée pour empêcher une corrosion galvanique, dans laquelle l'élément de connexion (10), le tuyau réfrigérant externe (9) et l'élément de couplage (20) sont réalisés en métal ; **caractérisée en ce que**
le matériau utilisé pour former le tuyau réfrigérant externe (9) est le A11060-O et le matériau utilisé pour former l'élément de couplage (20) est le Al7075-O.
